(19)

Europäisches
Patentamt
European
Patent Office
Office européen
des brevets

(11) **EP 3 943 576 A1**

(12) **EUROPEAN PATENT APPLICATION**
published in accordance with Art. 153(4) EPC

(43) Date of publication:
**26.01.2022 Bulletin 2022/04**

(21) Application number: **19920403.3**

(22) Date of filing: **01.11.2019**

(51) Int Cl.:
*C10G 9/38* [(2006.01)]  *B01J 19/26* [(2006.01)]
*C10B 55/00* [(2006.01)]

(86) International application number:
**PCT/RU2019/000782**

(87) International publication number:
**WO 2020/190168 (24.09.2020 Gazette 2020/39)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **19.03.2019 RU 2019107736**

(71) Applicant: **Feshenko, Yurij Vladimirovich
Tomsk Tomskaya oblast, 634045 (RU)**

(72) Inventor: **Feshenko, Yurij Vladimirovich
Tomsk Tomskaya oblast, 634045 (RU)**

(74) Representative: **Jeck, Anton
Jeck, Fleck & Partner mbB
Patentanwälte
Klingengasse 2
71665 Vaihingen/Enz (DE)**

(54) **METHOD OF HYDROCARBON PYROLYSIS AND DEVICE FOR IMPLEMENTING SAME**

(57)     The invention is classified as the oxidative pyrolysis of hydrocarbon feedstock. The method of oxidative pyrolysis involves heating of hydrocarbon feedstock, heating of a steam-oxygen mixture, combustion of hydrocarbon feedstock in vapors of a steam-oxygen mixture in a special reactor, rapidly cooling of the obtained products of incomplete combustion of chemical reactions in two steps, after which the cooled steam-gas mixture is sent to the fractionation unit. The hydrocarbons pyrolysis device consists of a steam-oxygen mixture and feedstock mixing chamber, a pyrolysis chamber and a coking reactor, a device for heating hydrocarbon feedstock, a device for heating steam-oxygen mixture connected to a mixing chamber, a coking reactor equipped with a device for supplying coolant to the pyrogas flow, a separation unit connected to the coking reactor, a fractionation unit equipped with an additional coolant supply device.

The technical result is the disposal of heavy oil residues by rapid coking with high economic efficiency and environmental safety while obtaining high-quality coke and producing aromatic compounds without construction or introduction of additional special installations.

EP 3 943 576 A1

## Description

Technical field

The invention is classified as the oxidative pyrolysis of hydrocarbon feedstock, particularly gasoline fractions, kerosene, gas oil, ethane, propane, and butane and as the rapid coking and can be used in the petrochemical industry.

Background of the invention

At present the petrochemical industry consumes large amounts of pyrolysis products (thermal, oxidative) of petroleum fractions (gasoline, kerosene, gas oil) used for production of plastics, synthetic yarns, rubber, and so on. At the same time, such pyrolysis products as light olefins and ethylene and propylene in particular are most valuable (from 30 to 45% of mass in pyrolysis products) [1, p. 54]. In addition, such byproducts of pyrolysis as aromatic hydrocarbons are also in great demand (benzene, toluene, xylene, naphthalene represent up to 8 to 15% of mass in pyrolysis products) [1, pp. 54-56]. At the same time, there is an urgent necessity to increase oil refineries' processing efficiency involving production of petroleum coke as the final product as well as carbon black which is one of coke's most popular forms. The proposed method and the device for its implementation will effectively solve issues of obtaining light olefins and carbon black using the oxidative pyrolysis method.

A general scheme of thermal pyrolysis is described in [1, pp. 95-200]. Feedstock for pyrolysis processes is either gaseous (ethane, propane, butane) or liquid (light gasoline and kerosene fractions, gas oils) hydrocarbons. The process suggests that the feedstock heated in the convection part of the furnace is mixed with the superheated water steam and is sent to the reaction coil located in the radiant part of the furnace. Using the heat of the fuel-air mixture's combustion products supplied to the walls of the coil decomposition of feedstock with formation of various (mostly light) products occurs. Upon that, the temperature of the reacting flow is gradually increased to 1100° - 1200°C after which the mixture is rapidly cooled to prevent loss of most valuable products during secondary reactions. Then the cooled mixture enters the compression, separation and gas separation units. The target products of such pyrolysis method are hydrogen (in case hydrocarbon gases are used as feedstock), olefins (primarily ethylene and propylene) and aromatic hydrocarbons (primarily homologues of benzene and naphthalene).

However, the process of thermal pyrolysis has such drawbacks as high capital cost for pyrolysis furnaces' construction due to the need to use high-alloy steels in large quantities, limited furnace capacity due to problems of hydraulic resistances in coils' pipes used for heating feedstock, issues of coke formation in furnaces' coils and technical difficulties of supplying large amounts of heat to coils' heated pipes.

The mentioned drawbacks do not arise when the method of oxidative pyrolysis is applied [2, p. 82]. Moreover, the equipment-specific design is significantly simplified: the oxidative pyrolysis reactor is a small pipe made of regular steel coated from the inside by fireclay brick [3, p.121]. Oxidative pyrolysis is carried out in the presence of oxygen, which provides the necessary temperature (1400 - 1600²C) by means of partial combustion of hydrocarbons. Pyrolysis at such temperatures is used, for instance, to produce acetylene-containing gases from methane. The device for oxidative pyrolysis has a mixing section in which methane is mixed with oxygen, a reaction section and a quenching section for reaction gases. The length of the reaction section is only 150 mm. In its final part the products are met by water sprayed through the nozzles ("hardening" occurs). At this moment the temperature of the gases decreases sharply and the chemical processes stop as a result of which the valuable unsaturated hydrocarbons obtained throughout the process are preserved as undesirable secondary reactions come to a complete halt. Hydrocarbon gases as well as light and heavy oil fractions can be used for oxidative pyrolysis, water and various hydrocarbons, melts of metals and their salts can be used for "quenching".

At the same time, the process of oxidative pyrolysis also has some specific drawbacks [4, p.398] resulting from the need to dispose of large amounts of heat from the mixture of water steam with products of incomplete combustion of hydrocarbons. For example, in case of processing 50-60 thousand tons of straight-run gasoline per year as feedstock for ethylene production about 15 tons of water steam with a temperature of about 100°C will be formed when quenching with water for an hour. The disposal of steam is a significant technical problem if there is no possibility of transferring this excess heat to external consumers. The problem of heat disposal during quenching by hydrocarbons is no less urgent.

There is a method for processing bituminous sands (RU № 2456328, IPC C10C1/04, C10G1/02, publ. as of 27.03.2012) which suggests simultaneous heating of bituminous sand at a temperature of 400-500°C in a visbreaking mixer-reactor and its thorough mixing until a homogeneous consistency is obtained. After the release of volatile fractions of petroleum products a new product with reduced viscosity is obtained. It is further sent to a fast coking reactor where the flow of the resulting product is dispersed and transported by a gas jet. The gas is supplied at a speed of 30-40 m/sec and the coking process is carried out in a hydrodynamic mode with creation of a stable gushing layer at the atmospheric pressure and temperature of 600-650°C (gas) during 1-2 seconds. After this, the obtained coke is removed and the coke gases are transferred to a device with the counter swirling flows where solid particles are separated, and later to a scrubber where separation into condensing and noncondensing components takes place. Carrying out the coking process in a hydrodynamic mode with the creation of a stable gushing layer and movement of the feedstock flow by a gas jet at the atmospheric pressure and temperature of 600-650°C during 1-2 seconds provides for the rapidness of coke formation and contributes to a stable release of the condensing component in the form of gas oils. It has been experimentally proven that the described modes are the most efficient during the coking process. Implementation of the processes mentioned above ultimately contributes to the maximum coke yield which is close to the material balance of the coke yield during delayed coking. What is more, the proposed technology of rapid coking involves significantly lower capital investments during construction and lower costs during operation compared to the delayed coking method.

The drawbacks of this method are that it uses the principle of thermal contact coking in which a contact coolant is required (more often coke grains) and applies an unstable fluid bed technology in which problems may occur during changing feedstock. It is also impossible to utilize the resulting coke in production of electrodes for the metallurgical industry and production of carbon black since it can only be used as fuel for boiler houses.

The most similar method to the one being proposed in terms of technical essence and obtained results is the method (RU N°2325426, IPC G10G9/38, publ. as of 25.07.2008) of processing hydrocarbon feedstock including that in the form of heavy oil residues containing fractions which boil at the temperature above 350°C. It suggests generation of a high-temperature coolant by burning fuel in oxygen, preheating of hydrocarbon feedstock above the melting point but below coke or tar formation temperature and simultaneous feeding of a high-temperature coolant and preheated hydrocarbon feedstock to the reaction section of the pyrolysis chamber; heating of hydrocarbon feedstock at a rate equal to (4-5)*105 deg/sec to temperatures of 700-2500°C followed by quenching of the reaction products. Peculiarity of this method is that the high-temperature coolant contains hydrogen in the concentration range from 30-35% of volume and after reaching the temperature of 700-2500°C in the reaction section, quenching components are introduced into the reaction flow in two steps and the reaction mixture is cooled at a cooling rate of 1 - 105-5*105 deg/sec to the temperature level of 600-1300°C during the first step and with a cooling rate of 2*104-4*104 deg/sec to the temperature of 300-1000°C during the second step to halt secondary processes. The method allows reducing sulfur content in the target products, increase the yield and ensure control of the fractional composition of the resulting target products.

The drawback of the given method is that it is one of the implementation options of the hydro-cracking process and is designed to increase the yield of light petroleum products (light liquid fractions) during pyrolysis (cracking) of heavy oil residues (mazut and gas oil) as well as to clean petroleum products from sulfur through utilization of hydrogen (the method of sulfur hydro-treatment). Quenching processes in this method occur very slowly (during 2-3 seconds) and are aimed at facilitating secondary processes occurring during hydro-cracking. However, to obtain lower olefins and diolefins (dienes) duration of the quenching process should not exceed 0.03 seconds during pyrogas cooling to the temperature of 540-760°C [1, p.118]. Therefore, the given method does not provide for olefins' production. In addition, application of this method makes the amount of coke and the volume of solid carbon particles significantly lower which eliminates the possibility of using it to produce carbon black.

To obtain the maximum efficiency of oil refining, and, consequently, produce the biggest amount of valuable petroleum products the oil production industry uses various equipment when implementing technologies for coking heavy oil residues. The most common method is the method of delayed coking. The process is carried out as given in [5, p. 310]. Secondary feedstock (heavy oil residues) is heated in tubular furnaces up to 490-510°C and sent into coke chambers - hollow vertical cylindrical installations with a diameter of 3-7 m and a height of 22-30 m.

The reaction mass is continuously fed into the chamber for 24-36 hours and coked under the impact of the heat accumulated by it. After the chamber is filled with coke by 70-90%, the coke is usually removed with a high-pressure water jet (up to 15 MPa). The coke enters the crusher, where it is crushed into pieces of not more than 150 mm in size, after which it is delivered to the size screen by an elevator, where it is divided into fractions of 150-25, 25-6 and 6-0.5 mm. The chamber from which the coke is discharged is warmed up with sharp water steam and steams from working coke chambers and again filled with the coked mass.

The major volume of low-ash petroleum coke is produced using delayed coking. It is applied in production of aluminum and for smelting of high-quality steels. However, the process of delayed coking of oil residues in such installations is accompanied by substantial foaming as a result of which the yield of volatile substances increases but the mechanical strength of coke decreases. In addition, the coking feedstock foaming leads to the premature termination of feedstock supply and, therefore, 35-40% of the volume of the coking chambers is not used so the efficiency of coke batteries sharply decreases [6, p. 167]. What is more, delayed coking installations require significant capital expenditure and significant depreciation charges since shut-off valves on coke devices need to be annually replaced and the repair interval is short (on average about 9 months). Finally, most coke produced by the delayed coking method can only be used as fuel for boiler houses that means it has low market value. Meanwhile, it is impossible to obtain such commercially profitable commodity product as carbon black from coke using the delayed coking technology.

There is a reactor for processing combustible carbon and/or carbon-containing products by pyrolysis (RU N° 2544669, IPC C 10B 49/02, C10J 3/72, F23G 5/027, C10B 53/00, C10B 57/00, B09B 3/00, publ. as of 20.03.2015). The reactor contains a torus for processing combustible carbon and/or hydrocarbon-containing products including a sealed working chamber working sections of which (unloading of solid processing residues with an unloading window; feeder of an oxygen-containing agent; heater of an oxygen-containing agent; combustion section; sections of coking and pyrolysis; section of heating of processed products; section of selection of a steam-gas mixture with at least one selection channel; a section for loading of processed products with a gateway) are arranged in a technological sequence. The working chamber contains a feeding section for wet small particles of solid fuel waste, their pyrolysis and coking, combined with sections for feeding and heating of an oxygen-containing agent, while its feeding channel is connected to a proportioning bunker of wet small particles of solid fuel waste with the possibility of forming a fluidized flow from them in the corresponding section inside the reactor.

The drawbacks of the given reactor for processing combustible carbon and/or carbon-containing products include the impossibility of obtaining such light olefins as ethylene, propylene and butylene in any adequate amount as pyrolysis products due to the fact that they are obtained by pyrolysis of light and medium fractions of hydrocarbons (for example, gasoline and kerosene) at the temperature of 750-900°C in a fraction of a second and then undergo rapid cooling ("quenching") with water or other liquids also in a fraction of a second. In the described installation such processes are not provided for and are, therefore, impossible. In the described installation the pyrolysis process is aimed at obtaining liquid pyrolysis products during the disposal of carbon-containing residues.

There is a reactor for processing hydrocarbon feedstock (RU № 2290991, IPC B01J19/2, G01G7/06, publ. as of 10.01.2007) considered to be the closest analogue, which belongs to devices for processing of cubic residues, tar, bitumen, mazuts, etc. The reactor for processing hydrocarbon feedstock consists of a gas mixture ignition unit and a prefabricated cooled casing which includes a working fluid formation chamber, a pyrolysis chamber with a feeding unit for processed feedstock and quenching chambers. Pipes for feeding and removal of reagents are connected to the body. The reactor additionally contains a hot gas generator the output of which is connected to the input of the working fluid formation chamber. The hot gas generator has an internal combustion chamber the walls of which are coaxial to the body of the hot gas generator. The combustion chamber communicates with the ignition unit of the gas mixture and is equipped with a supply pipe for the gas initiating combustion. In the entrance part of the working fluid formation chamber there is a collector with radial holes which communicates with the fuel feeding pipe. Between the working fluid formation chamber and the pyrolysis chamber there is a feeding unit for the processed feedstock made in the form of radial injectors mounted on the reactor's body. Between the pyrolysis chamber and the quenching chamber there is a hydrogen or hydrogen-containing gas feeding unit made in the form of radial injectors mounted on the reactor's body. The invention improves the quality of the resulting product and significantly increases the inter-repair period.

The drawback of the given device is that it is a reactor for performing the hydro-cracking process designed to increase the yield of light petroleum products (light liquid fractions) during pyrolysis (cracking) of heavy oil residues (mazut and gas oil). However, during operation of such a device coke formation and the volume of solid carbon particles are significantly reduced which does not allow using it for production of carbon black.

Disclosure of the invention

The main aim of the proposed group of inventions is to create an effective method for the oxidative pyrolysis of hydrocarbon feedstock, particularly gasoline fractions, kerosene, gas oil, ethane, propane, butane and a device for its performance in order to obtain olefins, aromatic hydrocarbons, hydrogen and carbon black in which heavy oil residues are disposed of and it is possible to simultaneously obtain light olefins, carbon black and selectively extract aromatic hydrocarbons by means of oxidative pyrolysis.

The technical outcomes include disposal of heavy oil residues by rapid coking with high economic efficiency and environmental safety while obtaining high-quality coke; by means of oxidative pyrolysis obtaining lower olefins by quenching pyrolysis products with heavy oil residues using incomplete combustion energy; obtaining aromatic compounds such as benzene, toluene as a result of pyrolysis, xylene and naphthalene by quenching and cooling with liquid hydrocarbons and selective extraction of aromatic hydrocarbons without construction and introduction of separate special devices.

At the same time, application of the proposed method and device produce a positive economic effect since they allow replacing several cost-intensive devices with one economical device.

The objective is achieved because in the old method of oxidative pyrolysis, based on generation of high-temperature coolant by incomplete combustion (oxidative pyrolysis) of preheated hydrocarbon feedstock in oxygen or in a mixture of oxygen and water steam (also preheated), rapid cooling (quenching) of pyrolysis products with liquid hydrocarbons carried out in two steps, light and medium oil fractions (gasoline, kerosene, gas oil) are used as pyrolysis feedstock in the oxidative pyrolysis device and the quenching of pyrolysis products is carried out with heavy oil residues (mazut, gas oil, cracking residue) by their finely-dispersed spraying into the flow of combustion products while reducing the temperature of the resulting steam-gas mixture to the temperature of the equilibrium value of combustion products within the range of at least 450°C and not more than 650°C during a short period of time. The resulting steam-gas is sent to the channel of the coking reactor with formation of coke particles and evaporation of gas-oil fractions from their surface and their partial cracking. After that the steam/dust/gas flow is sent to the separation unit, where the coke is separated. Then the coke is sent for further processing and the steam-gas mixture cleaned from coke undergoes the second step of cooling to the temperature of not lower than 250°C with liquid hydrocarbons, for example, oil, mazut, gas oil, by their finely-dispersed spraying into the pyrogas flow. Then the cooled steam-gas mixture is sent to the fractionation unit.

As hydrocarbon feedstock gasoline fractions, kerosene, gas oil, ethane, propane, butane can be used.

In the fractionation unit it is possible to produce light, medium and heavy oil fractions with such aromatic hydrocarbons (pyrolysis' products) dissolved in them as benzene, toluene, xylene and naphthalene while non-condensed gases containing olefins (ethylene, propylene and butylenes) from the fractionation unit can be used for further processing.

It is recommended to keep the water steam content in the steam-oxygen mixture in the range from 0 to 50% of mass.

It is reasonable to keep the content composition of the steam-oxygen mixture in the range from 15% to 25% of the mass of the feedstock undergoing pyrolysis. Hydrocarbon gases (methane, ethane, propane and butane) can be used as pyrolysis feedstock in case it is needed to obtain significant volumes of hydrogen (up to 40-50% of mass) in pyrolysis products.

It is recommended to cool the steam-gas mixture at the first step for the period of 0.005-0.03 seconds.

As a fractionation unit for the steam-gas-liquid mixture after the second cooling step a cyclone-type installation built according to the method of distillation of hydrocarbon feedstock by the patent of the Russian Federation № 2301250 can be used.

It is recommended to determine the dimensions of the channel of the coking reactor in accordance with performance of the oxidative pyrolysis unit for the resulting pyrogas and ensure that the residence time of coke particles in the channel of the coking reactor is at least 2 seconds.

Separation of coke particles from pyrogas in the operating unit can be carried out by means of electro-filtration in an electro-filter by fine coke particles' deposition on electrodes and agglomeration.

The coke obtained by the proposed method corresponds in its characteristics to technical carbon. The extraction of coke from the flow is carried out, for example, by its deposition on an electro-filter where it agglomerates. The formed agglomerates are shaken off into the gas flow and removed from the gas flow, for instance, by a gas-dynamic cyclone.

When using hydrocarbon gases as pyrolysis feedstock, a significant amount of hydrogen which can be used for hydro-treating, hydro-cracking, reforming, and others is generated in pyrolysis products (up to 40-50% of mass).

A significant difference from the known methods is that quenching at the first step is carried out by heavy oil fractions while reducing the temperature of the resulting steam-gas mixture to the equilibrium temperature of combustion products over a short period of time, for example, to the temperature not higher than 650°C because at higher temperatures reverse reactions occur and the yield of olefins sharply decreases and, for example, temperatures not lower than 450°C because at lower temperatures the time required for evaporation of gas oil from coke particles increases greatly.

It is also new and essential that cooling of pyrogas cleaned from coke particles is carried out by a wide fraction of liquid hydrocarbons (for example, oil) to the boiling point not lower than the boiling point of aromatic hydrocarbons, i.e. lying in the range of 250°C and above (naphthalene fraction is in the range of 210-240°C by boiling points, and the boiling of benzene, toluene and xylene occurs at a significantly lower temperatures of up to 150°C), which allows disposing of the excess heat from oxidative pyrolysis by fractionating the resulting mixture to obtain such oil fractions as naphtha, kerosene, diesel and mazut fractions with aromatic hydrocarbons dissolved in them. Fractionation of such steam-liquid flow can occur using any fractionation technology in which one-time evaporation and multiple step-by-step coolings are performed (for example, according to pat. RU № 2301250 with a cyclone-type installation). Such combined solution allows cutting down expenses on construction of a separate fractionation unit in which up to 3-3.5% of the mass of processed feedstock is spent on acceleration of fractions as working fuel for feedstock' heating and allows immediate obtaining of hydrocarbon fractions with aromatic hydrocarbons dissolved in them for their further extraction.

The objective can also be achieved if into a regular liquid and gaseous hydrocarbons' pyrolysis device with a mixing chamber of a steam-oxygen mixture and feedstock, a pyrolysis chamber and a coking reactor inside, a device for hydrocarbon feedstock heating and a device for heating steam-oxygen mixture connected to the mixing chamber of the steam-oxygen mixture and feedstock, a coking reactor and a separation unit connected to the coking reactor are additionally installed; the pyrolysis chamber is made in the form of a fire blocking grate with longitudinal channels in which combustion reactions occur; the entrance to the coking reactor is a quenching section and is equipped with a device for supplying coolant to the pyrogas stream; the separation unit is connected to the fractionation unit by a channel equipped with an additional coolant supply device.

It is reasonable to build the coolant supply devices in the form of a chain of spray nozzles made with the possibility of feeding the coolant under pressure.

The separation unit for separating coke particles from pyrogas can contain at least two electro-filters made with the possibility of intermittent switching as agglomerated carbon black accumulates on the electrodes of the working electro-filter.

It is recommended to build electro-filters with the possibility of switching the pyrogas flow to an electro-filter with cleaned electrodes, shaking them and transferring carbon by water steam or inert gas to the cooling unit.

The fire blocking grate can be made in the form of longitudinal channels that ensure that the residence time of reagents in the channel is not more than 0.003-0.01 seconds with reagents' movement speed exceeding the speed of flame propagation during reagents' combustion.

A significant difference from the prototype in the proposed device is the possibility of converting fine droplets of heavy residue into coke particles by cracking and evaporation of gas-oil fractions from their surface.

The proposed method of liquid and gaseous hydrocarbons' pyrolysis, production of carbon black and the device for their performance have not been previously known, therefore, the claimed solutions satisfy the "novelty" condition of patentability of the invention.

The analysis of the background of the invention for compliance of the proposed solutions with the "inventive step" condition of patentability of the invention showed the following.

In the described method of oxidative pyrolysis of hydrocarbon feedstock and the device operating on its basis, unlike those known for simultaneous production of light olefins and carbon black by recycling heavy oil residues, the pyrolysis gases are quenched at the first step with heavy oil residues to the temperature of the equilibrium value of combustion products not higher than 650°C and not lower than 450°C which allows obtaining light olefins and not losing them conducting rapid coking of finely-dispersed particles of atomized heavy oil residues and heavy pyrolysis resins as the flow temperature is more than 450°C and below this temperature the coking and pyrolysis processes occur too slowly.

It is recommended to maintain the flow temperature above 600°C (i.e. within 600-650°C) in order to obtain rapid coking in the shortest possible period of time.

The installation is equipped with a coking reactor the diameter and length of which ensure that the coking particles remain in the evaporation zone for at least 2 seconds which makes it possible to obtain coke in the form of fine carbon black. The steam-dust-gas flow from the coking reactor enters the separation unit where coke is separated by one of the traditional methods (for example, using electric filters). The coke then is sent for further processing and the steam-gas mixture purified from coke undergoes the second step of cooling by injecting a wide fraction of liquid hydrocarbons (for example, oil, gas condensate, gas oil) into the flow up to the boiling point of the end of boiling not lower than the boiling point of aromatic hydrocarbons (i.e. not lower than 250°C and up to 350°C) which allows dissolving the pyrocondensate obtained as a result of pyrolysis in oil feedstock that has already undergone single evaporation and is therefore prepared for fractional separation (for gasoline, kerosene, gas oil and mazut).

The aromatic compounds such as benzene, toluene, xylene and naphthalene obtained through pyrolysis during quenching and cooling with liquid hydrocarbons are dissolved in the hydrocarbon fractions corresponding to them in the boiling point, which ensures selective separation of aromatic hydrocarbons without construction and introduction of separate special devices for separating pyrocondensate into components which contributes to achieving the claimed technical result.

The proposed method and device are interconnected so much that they form a single inventive idea as one of them is intended for implementation of the other, the totality of the features of each affects the achieved technical result, and therefore this group of inventions satisfies the requirement of unity.

Brief description of the several views of the drawings

The proposed method of pyrolysis of liquid and gaseous hydrocarbons and the device for its implementation are illustrated by drawings, where

Fig. 1 depicts the diagram of the device implementing the proposed method of pyrolysis;
Fig. 2 depicts the diagram of the separation unit (item 8 in Fig. 1);
Fig. 3 depicts the diagram of the fractionation unit (according to the method of distillation of hydrocarbon feedstock, pat. RU N°2301250).

Examples of preferred options of the invention's implementation

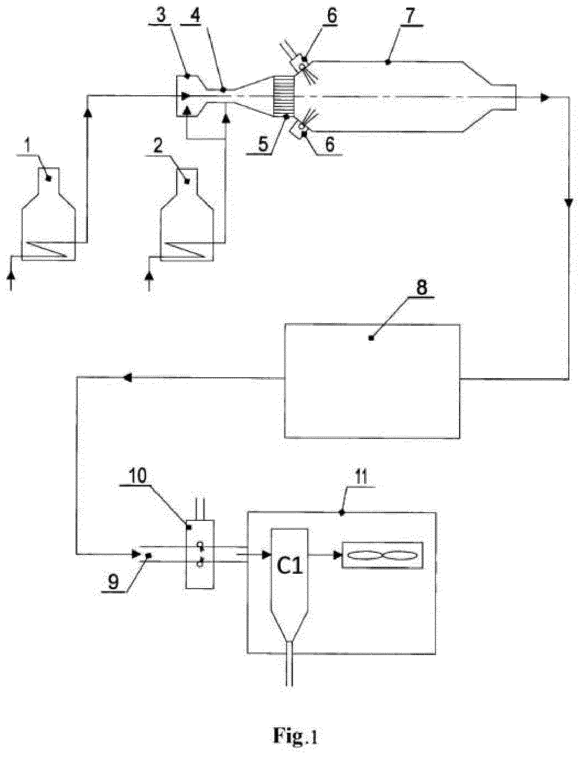

The device (Fig.1) contains a furnace 1 for heating hydrocarbon feedstock to 500-600°C, a furnace 2 for heating the oxidizer to 200-400°C (i.e. oxygen 10% to 20% of the mass of feedstock or a mixture of oxygen 10% to 20% of the mass of feedstock and water up to 20%), a mixing chamber 3 of the oxidizer and feedstock with an ignition section 4 at the outlet of the mixing chamber, a fire blocking grate 5 in the channels of which combustion reactions take place, a belt of spray nozzles 6 through which "quenching" liquid is fed under pressure (a range of petroleum products, most often heavy residues: mazut, gas oil, cracking residue), a coking reactor 7 which is a hollow pipe, a separation unit 8 for separating coke from the pyrogas flow, a channel 9 for supplying steam-gas mixtures into the fractionation unit 11, a belt of injectors 10 for injecting coolant represented by a wide fraction of hydrocarbons (i.e. oil, gas condensate, gas oil or diesel fraction) for post-cooling of steam-gas-liquid mixture at the second step of pyrogas cooling.

The proposed method using the device is implemented as follows.

The pyrolysis feedstock is fed by a pump (not depicted in the drawings) to the heating furnace 1 (Fig. 1). There it is heated up to 500-600°C and is then sent into the mixing chamber 3 of the steam-oxygen mixture and feedstock. Oxygen from the oxygen production unit (i.e. from the membrane air separation unit, not depicted in the drawings) is supplied under pressure to the furnace 2 and heated up to 300-400°C. Water steam is supplied separately at the temperature of 100°C. At the outlet of the mixing chamber 3 in the ignition section 4 there is a constant flame source from any type of ignition device. The ignited mixture enters the channels of the fire-blocking grate 5 with the thickness of 100 mm and with the channels' diameter of 8-12 mm. The shape of the channels can be cylindrical or conical, but it is important for the residence time of reagents in the channel to correspond to the rate of chemical reactions of oxidative pyrolysis determined experimentally and equal to about 0.003-0.01 seconds. In this case, the speed of movement of reagents in the channel cannot be lower than 30 m/sec, i.e. the speed of flame propagation, because otherwise combustion reactions might move into the mixing chamber 3. Knowing the total consumption of feedstock, it is possible to calculate the size of the fire-blocking grate and the number of channels by the selected diameter of the channels. For a rectangular channel the channel diameter is usually taken in the range of 8-12 mm, and for a conical channel up to 16 mm at the wide end. Pyrolysis reactions take place in the channels of the fire-blocking grate 5 and the red-hot grate itself serves as a stabilizer of combustion processes under conditions of lack of an oxidizer. At the outlet of the grate 5, a quenching liquid (for example, mazut) is supplied into the flow through the belt of injectors 6 for a sharp decrease in the flow temperature up to 600-650° C. The resulting steam-gas mixture enters the coking reactor 7 and then moves to the separation unit 8 in which the formed fine coke particles are separated from the flow and sent for cooling and further processing. The steam-gas mixture cleaned from coke enters the channel 9 where a cooling liquid (for example, oil) fed into the flow through the belt of injectors 10 reduces the temperature of the resulting steam-liquid mixture up to 350°C. The resulting steam-liquid mixture is sent to the fractionation unit 11.

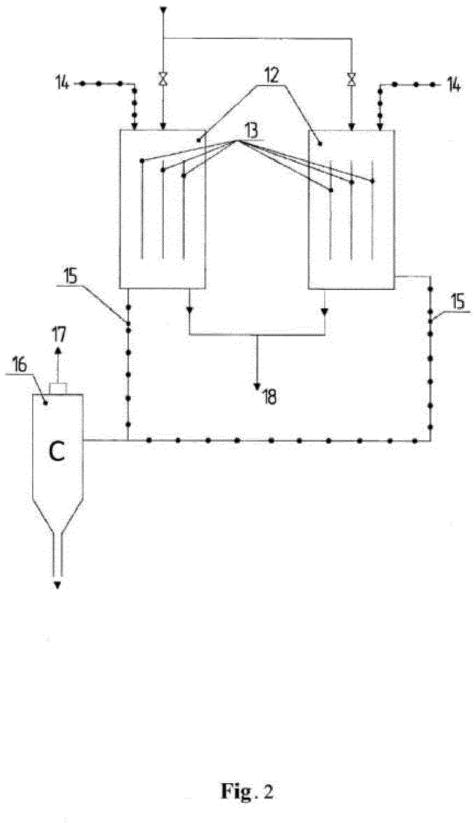

The diagram of the separation unit (item 8 in Fig.1) is given in Fig.2. The flow of pyrolysis gases with coke particles enters one of the two electric filters 12. Fine coke particles settle on the electrodes 13 and form agglomerates and the pyrogas cleaned from coke is sent to the fractionation unit (item 11 in Fig.1). As soon as a substantial amount of coke accumulates on the electrodes 13 the flow of pyrogas with coke particles is sent to the second electro-filter 12 and the flow is cleaned from coke through the second electro-filter. Meanwhile, a flow of water steam 14 (or inert gas) is sent to the first electro-filter 12 with simultaneous shaking of the accumulated coke from the electrodes. The flow of water steam picks up the pieces of agglomerated coke, partially cools them and the two-phase mixture of steam and coke particles 15 enters the cyclone separator 16. From the cyclone separator 16 the water steam cleaned from coke 17 is sent again to the cleaning of the electro-filter 12 and the coke from the cyclone 16 is sent for post-cooling and further processing as carbon black.

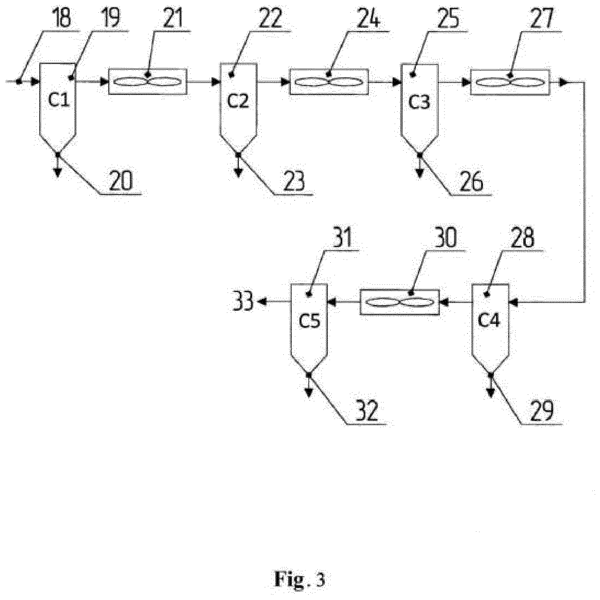

In Fig.3 the diagram of the fractionation unit according to the method of distillation of hydrocarbon feedstock based on the patent RU № 2301250 is presented. The diagram depicts five cyclone separators C1-C5 (19, 22. 25, 28, 31) for separation of steam-liquid mixtures and four air cooling units AV01-AV04 (21, 24, 27, 30) for partial condensation of hydrocarbon steam. In case oil is used for cooling of pyrolysis gases from the outlets of 18 electro-filters 12 (Fig.2) to the temperature of 360°C and any liquid hydrocarbons undergo pyrolysis, then the fractionation unit (Fig.3) works as follows. The steam-liquid mixture with a temperature of 360°C enters the first cyclone separator C1 (19). From the cyclone C1 (19) the condensed phase (liquid) represented by hydrocarbons with a boiling point above 360°C drains down the walls of the cyclone C1 (19) under the influence of gravity and after cooling enters the commodity park (mazut fraction) through the outlet 20. The mixture of steams with boiling points below 360°C comes from cyclone C1 (19) to the air cooling unit AV01 (21) where hydrocarbons with boiling points of 240°-360°C condense. From AV01 (21) the steam-liquid mixture enters the cyclone C2 (22) where after separating the steam and condensed phases the liquid with boiling points of 240°-360°C (component of diesel fuel) after cooling enters the warehouse through the outlet 23 (not depicted in the drawings) and the mixture of steams with boiling points below 240°C enters AV02 (24). In AV02 (24) hydrocarbons with boiling points of 200°C-240°C condense and the resulting steam-liquid mixture enters the cyclone C3 (25) where after separation of the steam and condensed phases the liquid with boiling points of 200°C - 240°C (component of diesel fuel with naphthalene dissolved in it) after cooling enters the naphthalene extraction unit (not depicted in the drawings) from where the fraction cleaned from naphthalene is mixed with the fraction of 240°C - 360°C (for production of diesel fuel) and the mixture of steams with boiling points below 200°C enters the AV03 (27). In AV03 (27) hydrocarbons with boiling points of 150°C - 200°C condense and the resulting steam-liquid mixture enters the cyclone C4 (28) where after separation of the steam and condensed phases the liquid with boiling points of 150°C - 200°C (gasoline component) enters the warehouse through the outlet 29, and the mixture of steams with boiling points below 150°C enters AV04 (30). In AB04 (30) hydrocarbons with boiling points below 150°C condense and the resulting steam-liquid mixture enters the cyclone C5 (31) where after separation of the gas and condensed phases the liquid with boiling points below 150°C (component of gasoline with BTX dissolved in; BTX is a mixture of benzene, toluene and xylene) after cooling enters through the outlet 32 the BTX extraction unit 9 (not depicted in the drawings) from where the fraction purified from BTX enters for mixing with the fraction 150°C-200°C (for production of gasoline) and the warehouse. Gases cleaned from the condensed phase in cyclone C5 contain from 30 to 50% of olefins and are supplied for further processing through the outlet 33.

Examples from practical application

Example 1.

The proposed method of hydrocarbon feedstock oxidative pyrolysis was implemented at an experimental plant of oxidative pyrolysis for processing 68 kg of straight-run gasoline per hour (boiling point IBP -180°C). The feedstock was heated to 500°C.
A mixture of oxygen 11% (of feedstock consumption) heated to 300°C and 8% of water steam heated to 100°C was used as an oxidizer. The shape of the channels of the fire-blocking grate was of square form with the side of 8 mm and a wall with the thickness of 3 mm. The rate of outflow of combustion products was adopted at 50 m/sec with an oxidative pyrolysis reaction time of 0.003 sec and the length of the grate's channels of 150 mm. In total, 16 square-shaped grate channels were made with four channels on each side of the grate.
The calculated adiabatic temperature of reaction products was approximately 1100°C, and the real temperature taking heat losses into account was about 950°C. Mazut was used as a quenching liquid. According to calculations 1.92 kg of mazut was taken for quenching (cooling) to the temperature of 600-650°C per 1 kg of the feedstock. For quenching, mazut from light oil was used with a yield of light oil products of about 71%. Therefore, the estimated yield of coke from such mazut was about 15% i.e. about 19.6 kg per hour. The temperature in the coking reactor was maintained in the range from 660°C at the beginning of the reactor to 615°C at the end of the coking reactor. The real yield of coke was 17.8-18.3 kg per hour. A modified electric filter for cleaning welding production gases was used as an electro-filter for deposition of coke particles in this model installation.
The average density of pyrogas at 650°C was 0.82 kg/m3 and the density of the steam phase at this temperature was about 6 kg/m3.
The estimated weight content of pyrogas was 38.5% and the weight content of the steam phase was 61.5%. Therefore, the volume flow rate of the steam-gas mixture in the coking channel was 112.5 m3/h or 0.03125 m3/sec.
The diameter of the coking reactor was adopted at 0.2 m, the flow rate was 1 m/sec and the length of the channel of the coking reactor was 2.5 meters, hence the residence time of the particles in the coking reactor was at least 2 seconds.
After cleaning from the coke, the steam-gas mixture entering fractionation with the mass flow rate of 0.0546 kg/sec was cooled with oil to 350°C. Cooling was carried out with oil with an average yield of light fractions of 71% with a flow rate of about 0.03 kg/sec.
As a result, the following pyrolysis products were obtained*:

*Pyrolysis gases were selected for analysis at the outlet of the fractionation unit. The indicators for BTX and naphthalene in pyrolysis products are obtained from the difference between these pyrolysis products dissolved in the corresponding fractions of the coolant (oil) and the indicators of BTX and naphthalene in the source oil. Data on product yields were obtained by a chromatograph.

Example 2.

Modular combined oxidative pyrolysis device for processing 77 kg of atmospheric gas oil per hour (boiling point 180°C-330°C). The feedstock was heated to 500°C.
A mixture of oxygen (heated to 300°C) in the amount of 11% and water steam (heated to 100°C) in the amount of 8% of the feedstock consumption was used as an oxidizer. The shape of the channels of the fire blocking grate was square with the side of 8 mm and the wall thickness of 3 mm. The calculated flow rate of the combustion products was adopted at 60 m/sec, the reaction rate of oxidative pyrolysis was 0.003 sec, the length of the grate's channels was 150 mm. In total, 16 square-shaped grate's channels were made with four channels on each side of the grate. The calculated adiabatic temperature of the reaction products was approximately 1240°C and the real temperature taking heat losses into account was about 980°C. Mazut was used as a quenching liquid. According to calculations, 2.0 kg of mazut was taken for quenching (cooling) to the temperature of 600-650°C per 1 kg of feedstock. For quenching, mazut from light oil was used with a yield of light oil products of about 71%. Therefore, the estimated yield of coke from such mazut was about 15%, i.e. about 23.1 kg per hour. The temperature in the coking reactor was about 650°C at the beginning of the reactor and 625°C at the end of the coking reactor. The actual yield of coke was 28.4-29.5 kg per hour. It is obvious that heavy pyrolysis resins also underwent coking. A modified electric filter for welding production gases cleaning was used as an electro-filter for deposition of coke particles for this model device. The total mass flow rate at the entrance to the coking reactor was 246.4 kg/h, of which the mass flow rate of the steam-gas mixture was:

$$246.4-29.0 = 217.4 \text{ kg/h}$$

The average density of pyrogas at 650°C turned out to be equal to 0.82 kg/m3, and the density of the steam phase at this temperature was about 6 kg/m3.

The estimated mass fraction of pyrogas was 38.0% and the mass fraction of the steam phase was 62.0%. The diameter of the coking reactor was adopted at 0.2 m, the flow rate was about 1 m/sec, and the length of the channel of the coking reactor was 2.5 meters, therefore, the residence time of the particles in the coking reactor was at least 2 seconds.

After cleaning from coke, the steam-gas mixture entering for fractionation with a mass flow rate of 0.0603 kg/sec was cooled with vacuum gas oil to 350°C with a flow rate of about 0.033 kg/sec.

As a result, the following pyrolysis products were obtained:

* Pyrolysis gases were selected for analysis at the outlet of the fractionation unit. The indicators for BTX and naphthalene in pyrolysis products are obtained from the difference between these pyrolysis products dissolved in the corresponding fractions of the coolant (gas oil) and the indicators of BTX and naphthalene in the initial gas oil. At the outlet of the separation unit a mixture of coolant and pyrocondensate was obtained, which also contains gasoline fractions with boiling points below 200°C. Data on product yields were obtained by a chromatograph.

Example 3

At the same model combined oxidative pyrolysis device, oxidative pyrolysis of methane gas was carried out in order to produce hydrogen. The consumption of ethane was 19 kg per hour. Ethane was heated to 500°C.

As an oxidizer, a mixture of 10% oxygen (heated to 300°C) and 10% of water steam (heated to 100°C) from the feedstock consumption was used. The shape of the channels of the fire blocking grate was square with the side of 8 mm and the wall thickness of 3 mm. The calculated flow rate of the combustion products was adopted at 60 m/sec, the reaction rate of oxidative pyrolysis was 0.003 sec, the length of the grate's channels was - 150 mm. In total, 4 square-shaped grate's channels were made with 2 channels on each side of the grate. The calculated adiabatic temperature of the reaction products was approximately 1200°C (and the real one, taking heat losses into account was about 1050°C).

Mazut was used as a quenching liquid. According to the calculations, 2.2 kg of mazut was taken for quenching (cooling) to the temperature of 600-650°C per 1 kg of the feedstock. For quenching, mazut from light oil was used with a yield of light oil products of about 71%. Therefore, the estimated yield of coke from such mazut was about 15%, i.e. about 6.3 kg per hour. The temperature in the coking reactor was maintained at 660°C at the beginning of the reactor and 635°C at the end of the coking reactor. The actual yield of coke was 6.8-7.2 kg per hour. (A modified electric filter for welding gases cleaning was used as an electro-filter for deposition of coke particles in this model device.)

The average density of pyrogas at 650°C turned out to be 0.2 kg/m3 and the density of the steam phase at this temperature was about 6 kg/m3.

The estimated mass fraction of pyrogas was 31.0% and the mass fraction of the steam phase was 69.0%. The diameter of the coking reactor was adopted at 0.2 m, the flow rate was 0.9 m/sec, and the length of the channel of the coking reactor was 2.5 meters. Therefore, the residence time of the particles in the coking reactor was at least 2 seconds.

As a result, the following pyrolysis products were obtained:

* Pyrolysis gases were selected for analysis at the outlet of the fractionation unit. Data on product yields were obtained by a chromatograph.

The volume of the resulting hydrogen turned out to be at least 50% of the volume of pyrogas. In addition, as a result of coking of mazut (in %) from the original mazut the following were obtained:

* Coking gasoline - 8%.
* Diesel fractions (boiling point 180°C-330°C ) - 17%.
* Distillates with boiling points above 330°C - 51%.
* Carbon black - 16.5%.

The proposed group of inventions contributes to creation of an effective method of hydrocarbon feedstock oxidative pyrolysis, particularly gasoline fractions, kerosene, gas oil, ethane, propane, butane and a device for its performance for the purposes of obtaining olefins, aromatic hydrocarbons, hydrogen and carbon black.

Reference list:

1. Mukhina T.N., Barabanov N.L., Menshikov V.A., Avrech G.L. Pyrolysis of hydrocarbons. - Moscow: Khimiya, 1987, Pp. 54-56, 118, 95-200.
2. Lebedev N.N. Chemistry and technology of basic organic and petrochemical synthesis, Moscow: Khimiya, 1988, p. 82.
3. Reichsfeld V.O. Reactional equipment and factories' machines, Leningrad : Khimiya, 1985, P. 121.
4. Miller, S.A. Acetylene, its properties, production and application. Translated from English. Leningrad, Khimiya, 1969, p. 398.
5. Proskuryakov V.A. Chemistry of oil and gas, St. Petersburg: Khimiya, 1995, P. 310.
6. Merkin A.P. Fragile miracle, Moscow: Khimiya, 1983, P. 167.

**Claims**

1. Method of oxidative pyrolysis of liquid and gaseous hydrocarbons based on heating of hydrocarbon feedstock, heating of a steam-oxygen mixture, combusting hydrocarbon feedstock in vapors of a steam-oxygen mixture in a special reactor, rapidly cooling of the obtained products of incomplete combustion of hydrocarbon feedstock is different due to the fact that the rapid cooling of products of incomplete combustion of hydrocarbon feedstock is carried out in two steps, wherein the first step is represented by finely-dispersed spraying of products of heavy oil residues combustion such as mazut, gas oil, cracking-residues into the flow of incomplete combustion products, while reducing the temperature of the resulting steam-oxygen mixture to the temperature of the equilibrium value of combustion products during a short period of time and sending the resulting steam-oxygen mixture into the channel of the coking reactor and then along this channel where the formation of coke particles and evaporation of gas-oil fractions from their surface and partial cracking take place, the steam/dust/gas flow is sent to the separation unit, wherein the obtained coke is separated and transported for further processing, while the steam-gas mixture cleaned of coke is subjected to the second step of cooling to the temperature not lower than 250°C by liquid hydrocarbons, for example, oil, mazut, gas oil, by means of their finely-dispersed spraying into the pyrogas flow, and after that the cooled steam-gas mixture is sent to the fractionation unit.

2. The method of oxidative pyrolysis according to claim 1, characterized that as hydrocarbon feedstock gasoline fractions, kerosene, gas oil, ethane, propane, butane are chosen.

3. The method of oxidative pyrolysis according to claim 1, characterized that light, medium and heavy oil fractions are obtained in the fractionation unit with such aromatic pyrolysis products dissolved in them as benzene, toluene, xylene and naphthalene, and non-condensed gases containing such olefins as ethylene, propylene and butylene are transferred from the fractionation unit for further processing.

4. The method of oxidative pyrolysis according to claim 1, characterized that the water steam content in the steam-oxygen mixture is kept at the range of 0 to 50 % of mass.

5. The method of oxidative pyrolysis according to claim 1, characterized that it provides the composition content of the steam-oxygen mixture at the range of 15% to 25% of the mass of hydrocarbon feedstock undergoing pyrolysis.

6. The method of oxidative pyrolysis according to claim 1, characterized that hydrocarbon gases such as methane, ethane, propane and butane are used as gaseous feedstock for pyrolysis which provides hydrogen volume in pyrolysis products of up to 40-50%.

7. The method of oxidative pyrolysis according to claim 1, characterized that a cyclone-type installation is used as a fractionation unit for the steam-gas-liquid mixture after the second cooling stage.

8. The method of oxidative pyrolysis according to claim 1, characterized that dimensions of the coking reactor channel are determined in accordance with the performance of the pyrolysis unit for the obtained pyrogas and ensure the residence time of at least 2 seconds for coke particles in the channel of the coking reactor.

9. The pyrolysis method according to claim 1, characterized that separation of coke particles from pyrogas in the separation unit is carried out by an electro-filter through deposition of fine coke particles on electrodes and their agglomeration by electro-filtration.

10. The method of oxidative pyrolysis according to claim 1, characterized that the cooling of the steam-gas mixture at the first step is carried out during 0.005-0.03 seconds.

11. The method of oxidative pyrolysis according to claim 1, characterized that the temperature of the equilibrium value of combustion products is selected within the range of not less than 450°C and not more than 650°C.

12. The device for carrying out oxidative pyrolysis of liquid and gaseous hydrocarbons by the method according to claim 1 consists of a mixing chamber for the steam-oxygen mixture and feedstock, a pyrolysis chamber and a coking reactor, **characterized by** the fact that it additionally includes a device for heating hydrocarbon feedstock, a device for heating steam-oxygen mixture connected to the mixing chamber for steam-oxygen mixture and feedstock, a coking reactor and a separation unit connected to the coking reactor, wherein the pyrolysis chamber is made in the form of a fire-blocking grate with longitudinal channels in which combustion reactions occur, wherein the entrance to the coking reactor is a quenching zone and it is equipped with a device for supplying coolant to the pyrogas flow, and the separation unit is connected to the fractionation unit by a channel equipped with an additional coolant supply device.

13. The device for oxidative pyrolysis according to claim 12, characterized that the coolant supply devices are made in the form of a belt of spray nozzles that provide the possibility of supplying the coolant under pressure.

**14.** The device for oxidative pyrolysis according to claim 12, characterized that the separation unit for separating coke particles from pyrogas contains at least two electro-filters made with the possibility of intermittent switching as agglomerated carbon black accumulates on the electrodes of the working electro-filter.

**15.** The device for oxidative pyrolysis according to claim 14, characterized that the electro-filters are made with the possibility of switching the flow of pyrogas to an electro-filter with cleaned electrodes.

**16.** The device for oxidative pyrolysis of liquid and gaseous hydrocarbons according to claim 14, characterized that the electro-filters are made with the possibility of shaking them and transporting carbon to the cooling unit by means of water steam or inert gas.

**17.** The device for oxidative pyrolysis according to claim 12, characterized that the fire-blocking grate is made in the form of longitudinal channels the size of which ensures that the residence time of reagents in the channel is not more than 0.003-0.01 seconds, while the speed of movement of reagents exceeds the speed of flame propagation during combustion of these reagents.

Fig.1

Fig. 2

**Fig. 3**

## INTERNATIONAL SEARCH REPORT

| International application No. |
| --- |
| PCT/RU 2019/000782 |

**A. CLASSIFICATION OF SUBJECT MATTER**
C10G 9/38 (2006.01); B01J 19/26 (2006.01); C10B 55/00 (2006.01)

According to International Patent Classification (IPC) or to both national classification and IPC

**B. FIELDS SEARCHED**

Minimum documentation searched (classification system followed by classification symbols)
C10G 9/38, B01J 19/26, C10B 55/00

Documentation searched other than minimum documentation to the extent that such documents are included in the fields searched

Electronic data base consulted during the international search (name of data base and, where practicable, search terms used)
EAPATIS, ESPACENET, PatSearch (RUPTO internal), Information Retrieval System of FIPS, PATENTSCOPE, Google

**C. DOCUMENTS CONSIDERED TO BE RELEVANT**

| Category* | Citation of document, with indication, where appropriate, of the relevant passages | Relevant to claim No. |
| --- | --- | --- |
| A, D | RU 2325426 C2 (OOO «KOMPANIYA PO OSVOENIJU NOVYKH TEKHNOLOGY V TOPLIVNO-ENERGETICHESKOM KOMPLEKSE «KONTTEK») 27.05.2008, p. 4, lines 1-4, p. 5, line 3 -p. 6, line 3, Figures | 1-17 |
| A, D | RU 2290991 C1 (ULKO BORIS NIKOLAEVICH) 10.01.2007, p. 4, lines 1-3, p. 6, line 23 -p. 7, line 36, figures | 1-17 |
| A | RU 2339674 C1 (GOSUDARSTVENNOE UNITARNOE PREDPRIYATIE "INSTITUT NEFTEKHIMPERERABOTKI RESPUBLIKI BASHKORTOSTAN") 27.11.2008 | 1-17 |
| A | WO 2012/177666 A1 (STATON, VERNON, ERIC et al.) 27.12.2012 | 1-17 |
| A | WO 2016/176255 A1 (GAS TECHNOLOGY INSTITUTE) 03.11.2016 | 1-17 |

| ☐ Further documents are listed in the continuation of Box C. | ☐ See patent family annex. |
| --- | --- |

| * Special categories of cited documents: | "T" later document published after the international filing date or priority date and not in conflict with the application but cited to understand the principle or theory underlying the invention |
| --- | --- |
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
| --- | --- |
| 24 January 2020 (24.01.2020) | 06 February 2020 (06.02.2020) |

| Name and mailing address of the ISA/ RU | Authorized officer |
| --- | --- |
| Facsimile No. | Telephone No. |

Form PCT/ISA/210 (second sheet) (April 2005)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- RU 2456328
- RU 2325426
- RU 2544669
- RU 2290991
- RU 2301250

### Non-patent literature cited in the description

- **MUKHINA T.N. ; BARABANOV N.L. ; MENSHIKOV V.A. ; AVRECH G.L.** *Pyrolysis of hydrocarbons. - Moscow: Khimiya,* 1987, vol. 118, 54-56
- **LEBEDEV N.N.** *Chemistry and technology of basic organic and petrochemical synthesis, Moscow: Khimiya,* 1988, 82
- **REICHSFELD V.O.** *Reactional equipment and factories' machines, Leningrad : Khimiya,* 1985, 121
- **MILLER, S.A.** Acetylene, its properties, production and application. *Translated from English. Leningrad, Khimiya,* 1969, 398
- **PROSKURYAKOV V.A.** *Chemistry of oil and gas, St. Petersburg: Khimiya,* 1995, 310
- **MERKIN A.P.** *Fragile miracle, Moscow: Khimiya,* 1983, 167